# EUROPÄISCHE PATENTSCHRIFT

(11) **EP 2 961 636 B1**
(45) Veröffentlichungstag und Bekanntmachung des Hinweises auf die Patenterteilung: **16.08.2017**
(21) Anmeldenummer: 14706284.8
(22) Anmeldetag: 27.01.2014
(51) Int. Cl.: B60R 1/08, G02F 1/13

(54) **RÜCKSPIEGELANORDNUNG FÜR KRAFTFAHRZEUGE**
REAR VIEW ARRANGEMENT FOR A MOTOR VEHICLE
SYSTÈME DE RÉTROVISEUR POUR VÉHICULES À MOTEUR

(30) Priorität: 01.03.2013 DE 102013203531
(43) Veröffentlichungstag der Anmeldung: 06.01.2016
(73) Patentinhaber: Magna Mirrors Holding GmbH, 63877 Sailauf (DE)
(72) Erfinder: KREBS, Peter, 63776 Mömbris (DE)
(74) Vertreter: Völger, Silke Beatrix
(86) Internationale Anmeldenummer: PCT/DE2014/200029
(87) Internationale Veröffentlichungsnummer: WO 2014/131407

(56) Entgegenhaltungen:
- WO-A2-2012/051294
- US-A- 3 614 210
- US-A- 5 448 397

## Beschreibung

Die vorliegende Erfindung betrifft eine Rückspiegelanordnung für Kraftfahrzeuge.

Rückspiegelanordnungen für Kraftfahrzeuge besitzen eine reflektierende Fläche, die das Beobachten des rückwärtigen Verkehrs ermöglicht. Üblicherweise sind die Rückspiegelanordnungen zusätzlich abblendbar ausgebildet. Hierdurch wird bei der Fahrt in der Dunkelheit ein Blenden durch hinterherfahrende Fahrzeuge vermieden. Bei automatisch abblendbaren Rückspiegelanordnungen messen bzw. erfassen Lichtsensoren den Helligkeitsunterschied zwischen Autovorfeld und rückwärtigem Verkehrsraum. Die Messwerte werden dann an eine Auswerte- und Steuerelektronik weitergeleitet und das Reflexionsvermögen der Spiegelanordnung entsprechend verändert. Hierbei werden Spiegelbaugruppen verwendet, die optische Zellen umfassen. Diese optischen Zellen können beispielsweise als Flüssigkristall-Zellen ausgebildet sein. Bei diesen Spiegelanordnungen ist bei Anlegen eines elektrischen Feldes das Reflexionsvermögen veränderbar.

Die vorbekannten Spiegelanordnungen mit einer Flüssigkristall-Zelle als optische Zelle bestehen im Wesentlichen aus einer Spiegelbaugruppe, die in einem Gehäuse gelagert ist. Das Gehäuse weist hierzu einen Aufnahmeraum auf, der nach vorne hin eine Aufnahmeöffnung aufweist. Das Gehäuse weist weiterhin üblicherweise ein Rahmenelement auf, welches bei der Montage die Spiegelbaugruppe im Randbereich klemmend fixiert. Die optische Zelle der Spiegelbaugruppe besteht im Wesentlichen aus einer vorderseitigen und rückseitigen transparenten Trägerschicht, zwei transparenten elektrisch leitfähigen Schichten, zwei Ausrichtschichten und einer mittig zwischen den Schichten angeordneten ein Flüssigkristallmedium umfassende Flüssigkristallschicht. Die Flüssigkristallmedium der Flüssigkristallschicht ist durch eine randseitig angeordnete umlaufende Dichtung zwischen den Ausrichtschichten abgedichtet aufgenommen. Die umlaufende Dichtung ist hierbei über eine randseitig angeordnete ringförmige Schicht eines Klebermaterials realisiert.

Eine Spiegelanordnung mit einer optischen Zelle ist beispielsweise aus der US 2004/0240029 A1 bekannt. Bei dieser Spiegelanordnung ist die optische Zelle in dem Rückspiegelgehäuse über ein den Randbereich der Spiegelbaugruppe übergreifendes Rahmenelement gehalten.

Bei Temperaturschwankungen oder auch sehr hohen Temperaturbelastungen kann es hierbei zu einer Beeinträchtigung der Dichtung der optischen Zelle kommen. Dies kann zu einer Einlagerung von Luft in das Flüssigkristallmedium oder zu einem Verlust von Flüssigkristallen führen. Hierdurch wird das durch die Spiegelanordnung erzeugte optische Bild beeinträchtigt.

Aus der WO2012051294, die den Oberbegriff des Anspruchs 1 bildet, ist eine Spiegelanordnung bekannt, die eine optische Zelle mit Flüssigkristall beschreibt, die in einem Rahmen eingesetzt ist, so dass die obere Seite nahezu mit dem Rahmen abschließt. In einer Ausführungsform ist die optische Zelle mit einem Füllmaterial verfüllt, das keine Halteeigenschaften aufweist. Die optische Zelle wird über Klipse gehalten.

Aufgabe der vorliegenden Erfindung ist es daher, eine automatisch abblendbare Rückspiegelanordnung für ein Kraftfahrzeug mit einer optischen Flüssigkristallzelle derart weiterzubilden, dass die Rückspiegelanordnung ein für den Fahrzeuginsassen als Benutzer dauerhaft einwandfreies optisches Bild erzeugt, ein geringes Gewicht aufweist, und hinsichtlich der Herstellkosten günstig ist.

Diese Aufgabe wird durch die im Anspruch 1 angegebenen Merkmale gelöst.

Durch den im Anspruch 1 angegebenen Aufbau der Spiegelbaugruppe, kann auch bei Temperaturschwankungen und hohen Temperaturbelastungen dauerhaft ein optisch einwandfreies Bild erzeugt werden. Dies wird durch die zusätzliche Anordnung einer Dichtung in einem Gehäusespalt zwischen Gehäuse und Spiegelbaugruppe erreicht. Aufgrund der rahmenlosen Halterung der Spiegelbaugruppe in dem Gehäuse wird eine verbesserte Optik des Displays für den Benutzer erreicht. Die Breite des Displays ist in den Figuren durch den Bemaßungspfeil D angezeigt.

Die Herstellkosten können erheblich reduziert werden, da die Spiegelbaugruppe über eine Dichtung in dem einteiligen Gehäuseelement gehalten wird und eine zusätzliche klemmende Fixierung der Spiegelbaugruppe über ein Rahmenelement des Gehäuseelementes entfallen kann.

Die Dichtung ist durch einen Klebstofffilm realisiert. Durch den Klebstoff wird einerseits eine Halterung der Spiegelbaugruppe in dem Gehäuseelement erreicht und andererseits eine zusätzliche Abdichtung erreicht. Hierdurch werden die eingangs genannten Nachteile beseitigt. Bei der Herstellung der verspiegelnden Elemente/Folie ist deren Schnittkante offen und muss üblicherweise abgedeckt bzw. versiegelt werden. Durch die zusätzliche Dichtung kann auf diese Kantenversiegelung der Spiegelbaugruppe verzichtet werden. Dies erzielt einen erheblichen Kostenvorteil. Das Gehäuseelement ist einteilig ausgeführt, wodurch die Anzahl der zu fertigenden Teile reduziert wird.

In einer erfindungsgemäßen weiteren Ausführungsform der Rückspiegelanordnung ist eine rahmenlose Festlegung der Spiegelbaugruppe an dem Gehäuse vorgesehen.

Weitere vorteilhafte Ausgestaltungen und Weiterbildungen der erfindungsgemäßen Rückspiegelanordnung ergeben sich aus den Unteransprüchen.

Bevorzugte Ausführungsformen der Rückspiegelanordnung für ein Kraftfahrzeug werden nachfolgend beispielshalber beschrieben, wobei veranschaulichend auf die beigefügten Zeichnungen Bezug genommen wird.

Es zeigen:
- Fig. 1: eine schematische Ansicht einer Rückspiegelanordnung als Innenspiegelanordnung,
- Fig. 2: einen Querschnitt einer Spiegelanordnung in einer ersten nicht erfindungsgemäßen Ausführungsform,
- Fig. 2.1: einen Querschnitt einer Spiegelanordnung in einer zweiten nicht erfindungsgemäßen Ausführungsform
- Fig. 3: einen Querschnitt einer Spiegelanordnung in einer dritten erfindungsgemäßen Ausführungsform; und
- Fig. 3.1: einen Querschnitt einer Spiegelanordnung in einer vierten erfindungsgemäßen Ausführungsform.

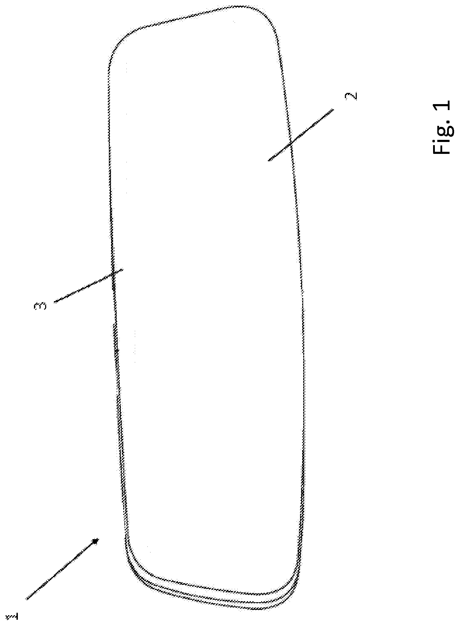

Figur 1 zeigt eine Rückspiegelanordnung 1 zum Einbau in ein Kraftfahrzeug in schematischer Darstellung in einer Vorderansicht. Eine Spiegelbaugruppe 2, mit der der nachfolgende Verkehr beobachtet werden kann, ist in einer ersten Ausgestaltung an einem Gehäuse 3 auf einem als Gehäuseelement ausgebildeten Trägerplatte 3a eingefasst gehalten. Das Gehäuseelement 3a weist hierzu einen Aufnahmeraum auf, der nach vorne hin eine Aufnahmeöffnung aufweist. Das Gehäuseelement 3a ist einteilig ausgeführt und ermöglicht eine rahmenlose Halterung der Spiegelbaugruppe 2. Das Gehäuse 3 mit Gehäuseelement 3a ist üblicherweise mit einer Haltevorrichtung/Spiegelfuß am Innenraum d.h. am Fahrzeughimmel oder an der Windschutzscheibe eines Kraftfahrzeugs festlegbar. In das Gehäuse 3 des Innenrückspiegels ist außerdem mindestens ein Lichtsensor eingebaut, mit dem die Lichtintensität der Umgebung aus Richtung des nachfolgenden Verkehrs erfasst wird. Des Weiteren wird die Lichtintensität des Vorfeldes des Kraftfahrzeuges erfasst. In Abhängigkeit der gemessenen Signale wird dann eine Ansteuerung und Abdunkelung der Spiegelbaugruppe 2 bewirkt. Die Rückspiegelanordnung 1 kann selbstverständlich auch als Außenspiegel ausgeführt sein.

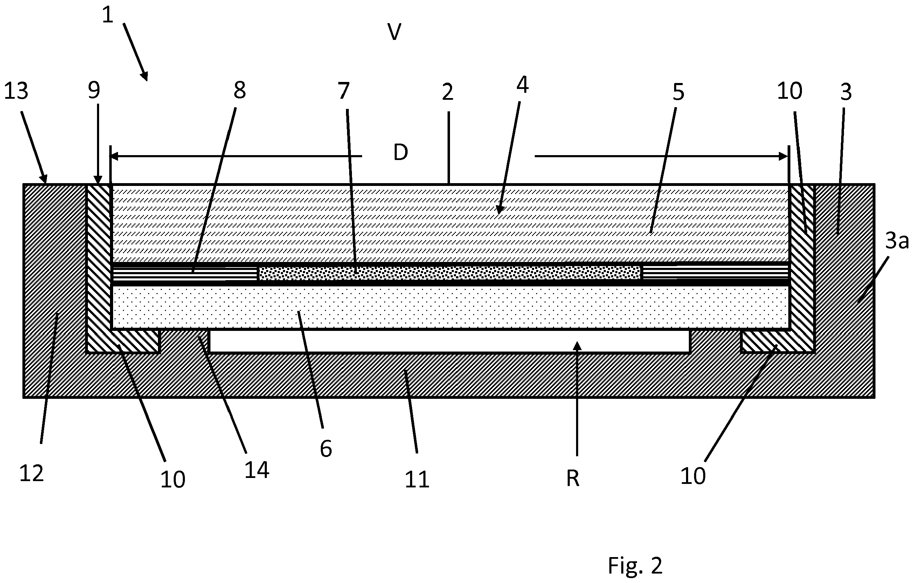

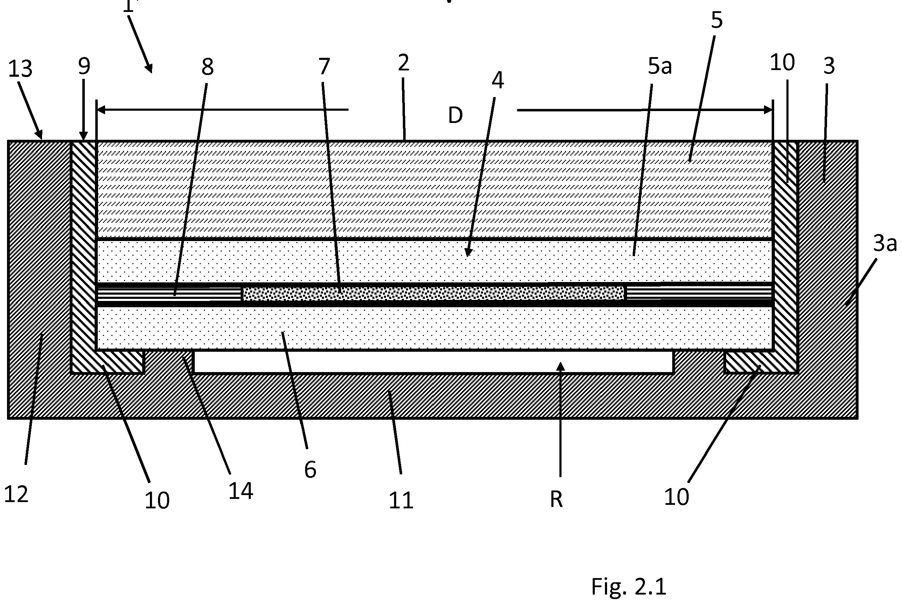

Anhand der Figur 2 wird nachfolgend eine erste Ausführungsform einer nicht erfindungsgemäßen Spiegelanordnung 1 beschrieben, die mit einer automatischen Abblendfunktion ausgestattet ist. Auf die Darstellung und näheren Beschreibung der die Lichtintensität erfassenden Sensoren, die Ansteuer- und Auswerteelektronik wird verzichtet. Diese ist dem Fachmann aus dem Stand der Technik bekannt. Die Darstellung der optischen Zelle ist nicht maßstäblich und nicht vollständig. Der grundsätzliche Aufbau und die Funktion sind dem Fachmann ebenso aus dem Stand der Technik bekannt.

Zur Veränderung des Reflexionsgrades umfasst die Spiegelbaugruppe 2 eine Flüssigkristallzelle 4, die eine transparente vorderseitige Trägerschichte 5, eine transparente rückseitige Trägerschicht 6 und eine zwischen den Trägerschichten 5,6 angeordnete elektrisch ansteuerbare ein Flüssigkristallmedium enthaltene Flüssigkristallschicht 7 aufweist. Bei dieser Technologie basierend auf Flüssigkristallen wird der Effekt ausgenutzt, dass bei Anlegen eines elektrischen Feldes an die Flüssigkristallzelle 4 sich die Flüssigkristallmoleküle parallel zum elektrischen Feld orientieren. Im Grundzustand, das heißt ohne ein elektrisches Feld sind die Flüssigkristallmoleküle in Längsrichtung d.h. Durchtrittsrichtung des Lichtes ausgerichtet. Um diese Ausrichtung zu erhalten sind Ausrichtschichten vorgesehen.

Wie eingangs bereits beschrieben, ist die Spiegelbaugruppe 2 in einem einteilig ausgebildeten als Trägerplatte bezeichneten Gehäuseelement 3a derart gelagert, dass eine rahmenlose Halterung der Spiegelbaugruppe 2 ermöglicht wird. Hierbei verbleibt zwischen dem Gehäuseelement 3a und der Spiegelbaugruppe 2 ein Gehäusespalt 9, in den bei der Montage der Spiegelanordnung 1 eine Dichtung 10 zur abdichtenden Halterung der Spiegelbaugruppe 2 in dem Gehäuseelement 3a eingefügt ist. Die Dichtung 10 ist hierbei vorzugsweise ein Klebstoff (bspsw. Epoxid oder Acrylat)
Zur Aufnahme der Spiegelbaugruppe 2 in das Gehäuseelement 3a ist das Gehäuseelement 3a als Gehäusehalbschale vorzugsweise aus einem Kunststoffmaterial ausgeführt, welche einen Gehäuseboden 11 und einen umlaufenden Gehäuserand 12 mit einer zur Vorderseite V weisenden Stirnfläche 13 umfasst. Gehäuseboden 11 und Gehäuserand 12 bilden dabei den nach vorne geöffneten Aufnahmeraum für die Spiegelbaugruppe 2. Der Gehäuseboden 11 ist mit Auflagerstellen 14 zur Abstützung der Spiegelbaugruppe 2 ausgeführt. Diese Auflagerstellen sind beispielsweise als stegförmige Auflagerstellen 14 ausgebildet.

Wie es aus der Figur 2 ersichtlich ist, ist die Spiegelbaugruppe 2 derart in dem Gehäuseelement 3a gehalten, dass die transparente vorderseitige Trägerschicht 5, die Dichtung 10 und die Stirnseite 13 des Gehäuserandes 12 bündig zueinander ausgerichtet sind. Die Dichtung 10 ist derart in den umlaufenden Gehäusespalt 9 eingefügt, dass sie den Gehäusespalt 9 zwischen der Gehäuseinnenwandung und der Spiegelbaugruppe vollständig abdichtend verschließt.

Die Flüssigkristallzelle 4 bzw. optische Zelle der Spiegelbaugruppe besteht im Wesentlichen aus dem nachfolgend beschriebenen Aufbau. Zwischen zwei transparenten elektrisch leitfähigen Schichten ist eine ein Flüssigkristallmedium umfassende Flüssigkristallschicht 7 abgedichtet angeordnet. Die Kontaktierung dieser flächigen Elektroden ist nicht dargestellt. Des Weiteren ist zwischen den elektrisch leitfähigen Schichten und der Flüssigkristallschicht 7 jeweils eine Schicht vorgesehen, die ein Ausrichten der Flüssigkristallmoleküle im Grundzustand (bei nicht angelegtem elektrischem Feld) bewirkt. Diese Schichten werden als Ausrichtschicht (alignment layer) bezeichnet, die ebenfalls transparent ausgestaltet sind. Die Flüssigkristalle des flüssigkristallinen Mediums der Flüssigkristallschicht 7 sind durch eine randseitig angeordnete umlaufende Dichtung zwischen den Ausrichtschichten abgedichtet aufgenommen. Die umlaufende Dichtung wird nachfolgend als Dichtungsrahmen 8 bezeichnet und kann über eine randseitig angeordnete ringförmige Schicht eines Klebermaterials erreicht werden.

Die zuvor beschriebene Schichtanordnung mit Flüssigkristallschicht 7 ist zwischen zwei transparenten Trägerschichten 5, 6 angeordnet. Von der Vorderseite V der Rückspiegelanordnung aus gesehen, ist die transparente Trägerschicht 5 als Glasschicht ausgeführt und wird als vorderseitige Trägerschicht bezeichnet. Die Glasschicht hat die Funktion eines Kratzschutzes. Als weiteres Material für die vorderseitig angeordnete transparente Trägerschicht 5 kann auch eine transparente Folie oder Kunststoffplatte verwendet werden. Auf der zum Gehäuseboden 11 hin weisenden Seite wird die transparente Trägerschicht 6 als rückseitige Trägerschicht bezeichnet und kann als transparente Folie, Kunststoffplatte oder Glas ausgebildet sein.

Die rückseitige Trägerschicht 6 ist auf der zum Gehäuseboden 11 hin weisenden Seite mit einer nicht transparenten reflektierenden Schicht versehen. Die nicht transparente reflektierende Schicht 13 kann hierbei aus einer metallischen Beschichtung bestehen. Diese Schicht wird beispielsweise durch Aufdampfen oder Sputtern oder Sprühen erzeugt. Die reflektierende Schicht ist in der Zeichnung nicht dargestellt.

Zusammenfassen ist nachfolgend der Schichtaufbau der Spiegelbaugruppe 2 ausgehend von der Vorderseite der Rückspiegelanordnung 1 aufgelistet:
- transparente Trägerschicht
- elektrisch leitfähige Schicht
- Ausrichtschicht
- Flüssigkristallschicht mit Flüssigkristallmedium und Dichtungsrahmen
- Ausrichtschicht
- elektrisch leitfähige Schicht
- transparente Trägerschicht
- reflektierende Schicht oder halbtransparente reflektierende Schicht

In einer nicht dargestellten weiteren Ausführungsform wird im Unterschied zu der zuvor beschriebenen Ausführung der Spiegelbaugruppe 2 die reflektierende Schicht als halbtransparente reflektierende Beschichtung ausgebildet. Dies ermöglicht die zusätzliche Anordnung einer Displayanordnung auf der Rückseite der Spiegelbaugruppe 2.

In Figur 2.1 ist eine erste alternative Ausführungsform der Rückspiegelanordnung 1' gezeigt. Gleiche Bezugszeichen zeigen hierbei gleiche Teile. Diese werden der Einfachheit halber nicht beschrieben. Im Unterschied zu der in der Figur 2 gezeigten Ausführungsform umfasst die Spiegelbaugruppe 2 eine weitere transparente Schicht. Diese transparente Schicht 5a ist zwischen der transparenten Trägerschicht 5 und der elektrisch leitfähigen Schicht angeordnet. Die zusätzliche transparente Schicht 5a ist vorzugsweise eine transparente Folie.

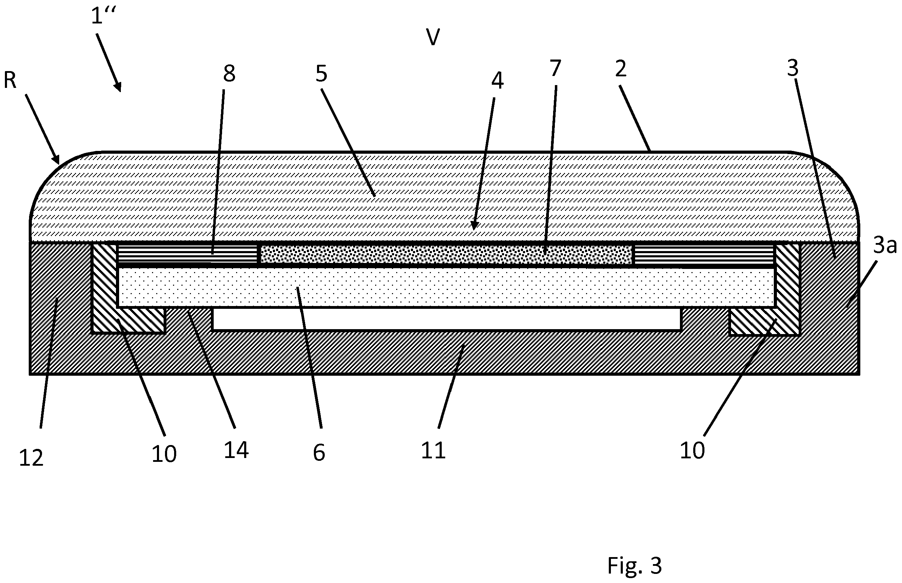

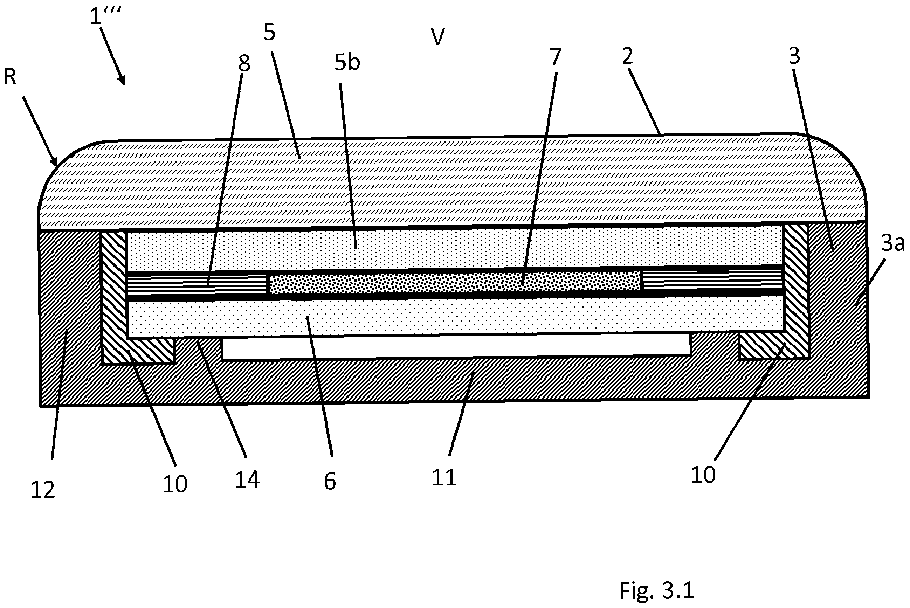

Die in Figur 3 dargestellte Ausführungsform zeigt eine Ausgestaltung einer erfindungsgemäßen Rückspiegelanordnung 1". Gleiche Teile werden hierbei mit gleichen Bezugszeichen benannt. Im Unterschied zu der in der Figur 2 beschriebenen Spiegelbaugruppe 2 ist die Spiegelbaugruppe 2 derart in dem Gehäuse 3 gehalten, dass die transparente vorderseitige Trägerschicht 5 die Stirnseite 13 des Gehäuserandes 12 überdeckt und mit der Außenkontur 3a der Gehäusehalbschale bündig abschließt. Der umlaufende nach vorne weisende Randbereich R der transparenten vorderseitigen Trägerschicht 5 ist dabei abgerundet ausgeführt.

Des Weiteren ist in der Figur 3.1 eine vierte alternative erfindungsgemäße Ausführungsform dargestellt. Auch hier sind gleiche Teile mit gleichen Bezugszeichen dargestellt. Im Unterschied zu der in der Figur 3 dargestellten Ausführungsform ist hier eine zusätzliche transparente Schicht 5b vorgesehen. Diese transparente Schicht 5b ist zwischen der transparenten Trägerschicht 5 und der elektrisch leitfähigen Schicht angeordnet. Die zusätzliche transparente Schicht 5b ist vorzugsweise eine transparente Folie.

## Patentansprüche

1. Rückspiegelanordnung (1, 1', 1", 1''') für Kraftfahrzeuge, mit einem Gehäuse (3) und einer im Gehäuse (3) gehaltenen eine Flüssigkristall-Zelle (4) umfassenden Spiegelbaugruppe (2) zur Beobachtung des nachfolgenden Verkehrs, wobei der Reflexionsgrad der Spiegelbaugruppe (2) durch eine Steuervorrichtung veränderbar ausgeführt ist, und die Flüssigkristall-Zelle eine transparente vorderseitige Trägerschichte (5), eine transparente rückseitige Trägerschicht (6), welche jeweils eine transparent elektrisch leitfähige Schicht und eine Ausrichtschicht umfassen und eine zwischen den Trägerschichten (5, 6) angeordnete elektrisch ansteuerbare ein Flüssigkristallmedium enthaltene Flüssigkristallschicht (7) aufweist, und wobei die Flüssigkristallschicht mittels einem zwischen den Trägerschichten (5, 6) angeordneten Dichtungsrahmen (8) abgedichtet gehalten ist, **dadurch gekennzeichnet, dass** das Gehäuse (3) ein Gehäuseelement (3a) umfasst, welches einteilig ausgebildet ist und eine rahmenlose Halterung der Spiegelbaugruppe (2) ermöglicht, und dass zwischen dem Gehäuseelement (3a) und der Spiegelbaugruppe (2) ein Gehäusespalt (9) verbleibt, in den eine Dichtung (10) zur abdichtenden Halterung der Spiegelbaugruppe (2) in dem Gehäuse eingefügt ist, wobei die Spiegelbaugruppe (2) derart in dem Gehäuseelement (3a) gehalten ist, dass die transparente vorderseitige Trägerschicht (5) die Stirnseite (13) des Gehäuserandes überdeckt und mit der Außenkontur des Gehäuseelements (3a) bündig abschließt.und wobei die Dichtung ein Klebstoff ist, der ein Epoxid oder Acrylat ist.

2. Rückspiegelanordnung (1) für Kraftfahrzeuge nach Anspruch 1, wobei die transparente vorderseitige Trägerschicht bzw. die transparente rückseitige Trägerschicht (6) als optisch transparente Folie, Glasplatte oder transparente Kunststoffplatte ausgebildet ist.

3. Rückspiegelanordnung (1) für Kraftfahrzeuge nach einem der vorangehenden Ansprüche, wobei die Dichtung (10) derart eingefügt ist, dass sie sich ausgehend von der Oberkante des Gehäuserandes (12) bis in einen Randbereich zwischen Gehäuseboden (11) und Unterseite der Spiegelbaugruppe (2) erstreckt.

4. Rückspiegelanordnung (1) für Kraftfahrzeuge nach einem der vorangehenden Ansprüche, wobei der Gehäuseboden (11) mit Auflagerstellen (14) zur Abstützung der Spiegelbaugruppe (2) ausgeführt ist.

5. Rückspiegelanordnung (1) für Kraftfahrzeuge nach einem oder mehreren der vorangehenden Ansprüche, wobei ausgehend von einem oberen Endbereich des Gehäuserandes (13) des Gehäuseelementes ein radial zu einem Aufnahmeraum des Gehäuseelementes (3a) sich erstreckender ringförmiger Steg (15) ausgebildet ist, und der Gehäusespalt (9) zwischen Spiegelbaugruppe (2), Steg (15), Gehäuserand (13) und Gehäuseboden (11) verbleibt.

6. Rückspiegelanordnung (1) für Kraftfahrzeuge nach einem der vorangehenden Ansprüche, wobei der Gehäusespalt (9) umlaufend ausgebildet ist und die Dichtung (10) den Gehäusespalt (9) vollständig abdichtend verschließt.

## Claims

1. Rear-view mirror arrangement (1, 1', 1", 1''') for motor vehicles, having a housing (3) and having a mirror assembly (2), which is held in the housing (3) and which comprises a liquid-crystal cell (4), for viewing the following traffic, wherein the reflectance of the mirror assembly (2) can be varied by means of a control device, and the liquid-crystal cell has a transparent front-side carrier layer (5), a transparent rear-side carrier layer (6), which each comprise a transparent, electrically conductive layer and an alignment layer and, arranged between the carrier layers (5, 6), an electrically actuable liquid-crystal layer (7) which contains a liquid-crystal medium, and wherein the liquid-crystal layer is held in sealed-off fashion by means of a seal frame (8) arranged between the carrier layers (5, 6), **characterized in that** the housing (3) comprises a housing element (3a) which is of unipartite form and which permits frameless retention of the mirror assembly (2), and **in that**, between the housing element (3a) and the mirror assembly (2), there remains a housing gap (9) into which there is fitted a seal (10) for the sealed retention of the mirror assembly (2) in the housing, wherein the mirror assembly (2) is held in the housing element (3a) such that the transparent front-side carrier layer (5) covers the face side (13) of the housing rim and terminates flush with the outer contour of the housing element (3a), and wherein the seal is an adhesive which is an epoxy or acrylate.

2. Rear-view mirror arrangement (1) for motor vehicles according to Claim 1 wherein the transparent front-side carrier layer or the transparent rear-side carrier layer (6) is in the form of an optically transparent foil, glass plate or transparent plastics plate.

3. The rear-view mirror arrangement (1) for motor vehicles as claimed in one of the preceding claims, wherein the seal (10) is fitted such that it extends from the upper edge of the housing rim (12) into a rim region between the housing base (11) and lower side of the mirror assembly (2).

4. The rear-view mirror arrangement (1) for motor vehicles as claimed in one of the preceding claims, wherein the housing base (11) is formed with bearing points (14) for supporting the mirror assembly (2).

5. The rear-view mirror arrangement (1) for motor vehicles as claimed in one or more of the preceding claims, wherein, proceeding from an upper end region of the housing rim (13) of the housing element, there is formed a ring-shaped web (15) which extends radially so as to form a receiving space of the housing element (3a), and the housing gap (9) remains between mirror assembly (2), web (15), housing rim (13) and housing base (11).

6. The rear-view mirror arrangement (1) for motor vehicles as claimed in one of the preceding claims, wherein the housing gap (9) is of encircling form and the seal (10) completely closes off the housing gap (9) in sealing fashion.

## Revendications

1. Système de rétroviseur (1, 1', 1", 1"') pour des véhicules à moteur, avec un boîtier (3) et un module de miroir (2) comprenant une cellule à cristaux liquides (4) contenue dans le boîtier (3) pour l'observation du trafic qui suit, dans lequel le degré de réflexion du module de miroir (2) est réalisé de façon variable au moyen d'un dispositif de commande, et la cellule à cristaux liquides (4) présente une couche de support avant transparente (5), une couche de support arrière transparente (6), qui comprennent respectivement une couche électriquement conductrice transparente et une couche d'orientation, et une couche de cristaux liquides (7) disposée entre les couches de support (5, 6), à commande électrique et contenant un fluide à cristaux liquides, et dans lequel la couche de cristaux liquides est maintenue de façon étanche au moyen d'un cadre d'étanchéité (8) disposé entre les couches de support (5, 6), **caractérisé en ce que** le boîtier (3) comprend un élément de boîtier (3a), qui est réalisé d'une seule pièce et qui permet un support sans cadre du module de miroir (2), et **en ce qu'**il subsiste entre l'élément de boîtier (3a) et le module de miroir (2) une fente de boîtier (9), dans laquelle est inséré un joint (10) destiné au support étanche du module de miroir (2) dans le boîtier, dans lequel le module de miroir (2) est maintenu dans l'élément de boîtier (3a) de telle manière que la couche de support avant transparente (5) recouvre le côté frontal (13) du bord de boîtier et épouse étroitement le contour extérieur de l'élément de boîtier (3a), et dans lequel le joint est un adhésif, qui est un époxyde ou un acrylate.

2. Système de rétroviseur (1) pour des véhicules à moteur selon la revendication 1, dans lequel la couche de support avant transparente ou la couche de support arrière transparente (6) est constituée par un film optiquement transparent, une plaque de verre ou une plaque de matière plastique transparente.

3. Système de rétroviseur (1) pour des véhicules à moteur selon l'une quelconque des revendications précédentes, dans lequel le joint (10) est inséré de telle manière qu'il s'étende depuis l'arête supérieure du bord de boîtier (12) jusque dans une région de bord entre le fond de boîtier (11) et le côté inférieur du module de miroir (2).

4. Système de rétroviseur (1) pour des véhicules à moteur selon l'une quelconque des revendications précédentes, dans lequel le fond de boîtier (11) est réalisé avec des points d'appui (14) pour soutenir le module de miroir (2).

5. Système de rétroviseur (1) pour des véhicules à moteur selon une ou plusieurs des revendications précédentes, dans lequel une nervure annulaire (15) s'étendant radialement jusqu'à une chambre de réception de l'élément de boîtier (3a) est formée à partir d'une région d'extrémité supérieure du bord de boîtier (13) de l'élément de boîtier, et la fente de boîtier (9) reste entre le module de miroir (2), la nervure (15), le bord de boîtier (13) et le fond de boîtier (11).

6. Système de rétroviseur (1) pour des véhicules à moteur selon l'une quelconque des revendications précédentes, dans lequel la fente de boîtier (9) est formée en périphérie et le joint (10) ferme complètement la fente de boîtier (9) de façon étanche.
